# FASCICULE DE BREVET EUROPEEN

(11) **EP 2 041 045 B1**
(45) Date de publication et mention de la délivrance du brevet: **28.04.2010**
(21) Numéro de dépôt: 07786986.5
(22) Date de dépôt: 02.07.2007
(51) Int. Cl.: C04B 40/00, C04B 28/02, C04B 28/14

(54) **ENDUIT SOUS FORME DE PARTICULES DISCRETES COMPRIMEES NOTAMMENT DE PASTILLES**
ÜBERZUG IN FORM VON VERDICHTETEN DISKRETEN TEILCHEN, WIE PELLETS
COATING IN THE FORM OF COMPRESSED DISCRETE PARTICLES, SUCH AS PELLETS

(30) Priorité: 04.07.2006 FR 0652792
(43) Date de publication de la demande: 01.04.2009
(73) Titulaire: Beissier, 77760 La Chapelle La Reine (FR)
(72) Inventeur: PFLANZ, Frédéric, F-91400 Orsay (FR); MACQUET, Cécile, F-91400 Orsay (FR)
(74) Mandataire: Ilgart, Jean-Christophe
(86) Numéro de dépôt international: PCT/EP2007/056642
(87) Numéro de publication internationale: WO 2008/003676

(56) Documents cités:
- WO-A-98/37032
- WO-A-03/033570
- WO-A-2004/096922
- WO-A-2006/010439
- DE-A1- 19 831 856

## Description

### DOMAINE TECHNIQUE

L'invention concerne un enduit qui se présente sous la forme de particules discrètes.

Ces particules comprennent un enduit en poudre mis en forme et comprimé.

Plus particulièrement, l'invention a trait à un enduit se présentant spécifiquement sous la forme de pastilles, comprimés, tablettes ou toute autre particule discrète de forme déterminée.

Les enduits sont des produits destinés à la préparation de supports avant finition.

Dans certains cas, les enduits peuvent également avoir une fonction décorative et être laissés en l'état ; les enduits ont alors une fonction de préparation des fonds et de finition.

Les enduits se présentent généralement soit sous la forme d'une poudre, soit sous la forme d'une pâte.

Les enduits en poudre peuvent être à base de liants hydrauliques tels que ciment ou plâtre, ou à base de résine seule sans liant hydraulique.

Les enduits hydrauliques sont historiquement les plus anciens, ils sont les plus performants en termes de performances telles que notamment la dureté, la résistance mécanique, la résistance à l'eau, la vitesse de séchage, la capacité de rebouchage et la limitation du retrait.

Pour les applications intérieures, les enduits de préparation des fonds à base hydraulique sont majoritairement à application manuelle.

Les enduits en poudre à base de plâtre, les plus communs en usage intérieur, permettent d'exploiter le caractère expansif du plâtre pour obtenir aisément un enduit à très faible retrait dont les performances sont adaptables aux besoins des utilisateurs.

Les enduits en poudre à base de résine seule et sans liant hydraulique ont des performances et des propriétés comparables aux enduits en pâte. Ils sont destinés majoritairement aux applications mécanisées.

Les enduits en pâte encore appelés enduits prêts à l'emploi ont précisément la particularité d'être prêts à l'emploi, après un éventuel ajustement de la viscosité. Ils peuvent être facilement et sans contraintes appliqués de manière mécanique, en raison de l'absence de prise hydraulique.

Ces produits sont aisés d'utilisation et destinés très majoritairement aux applications de lissage en faible épaisseur : en effet, ces produits présentent un retrait assez prononcé qui ne permet pas de les utiliser dans les applications en forte épaisseur sans fissures ou sans retrait prononcé.

Des produits de rebouchage classiques en pâte existent cependant avec les limitations d'usage suivantes :
- séchage lent ;
- retrait prononcé ;
- capacité de rebouchage très limitées.

Des produits de rebouchage allégés en pâte existent également, avec des capacités de rebouchage sensiblement améliorées, mais ces produits présentent encore les limitations d'usage suivantes :
- séchage en profondeur long ;
- dureté superficielle médiocre ;
- propriétés d'application assez médiocres.

De manière générale, aussi bien les enduits en poudre que les enduits en pâte ou prêts à l'emploi présentent aussi de nombreux inconvénients.

En ce qui concerne les produits prêts à l'emploi, les applications de lissage et de rebouchage nécessitent deux produits différents. Ces produits ont en outre des capacités d'utilisation limitées du fait du retrait naturel des pâtes au cours du séchage et de l'absence de prise hydraulique.

Dans le cas des produits de services utilisés ponctuellement avec de faibles consommations, les enduits en pâte demandent à être manipulés et conservés dans de bonnes conditions, à savoir dans un récipient non pollué et fermé hermétiquement pour prévenir le séchage de la pâte et l'éventuel développement de microorganismes qui rendrait l'enduit inutilisable.

En ce qui concerne les produits en poudre, ils demandent à être gâchés, ce qui pose un problème de savoir-faire et de dosage de l'eau et de la poudre pour les utilisateurs non professionnels.

En fonction de la quantité nécessaire, l'utilisateur doit avoir à sa disposition des récipients et des outils adaptés de différentes tailles.

Les enduits en poudre génèrent de la poussière lors de leur manipulation et de leur gâchage.

Une fois le sac contenant la poudre ouvert, celui-ci ne peut généralement pas se refermer et se conserve mal du fait de l'absorption d'humidité.

Par ailleurs, le document WO-A-2004/096922 décrit un concentré de pigments à désintégration rapide qui peut être utilisé notamment pour colorer des matériaux de construction comme le béton.

Ce concentré comprend des agents liants comme le ciment ou le plâtre, des agents dispersants comme la cellulose, des agents mouillants, et un agent de désintégration comprenant des fibres cellulosiques qui, lorsqu'on met le concentré en contact avec de l'eau, provoque une désintégration quasiment totale de sa structure et libère le pigment.

Ce document ne décrit ni ne suggère un enduit qui se présente sous la forme de particules discrètes comprimées, comprenant au moins un agent liant et au moins un agent de désintégration spécifiquement choisi parmi les additifs effervescents.

Il existe, donc au vu de ce qui précède, un besoin pour un enduit qui ne présente pas les inconvénients, limitations et désavantages tant des enduits en poudre ou des enduits en pâte « prêts à l'emploi » tout en présentant les avantages de chacun de ces types de produit.

En particulier, il existe un besoin pour un enduit qui ait des performances élevées, égales à celles d'un enduit en poudre mais qui ait aussi une qualité d'utilisation équivalente à celle des produits prêts à l'emploi tout en évitant des problèmes de stockage et de conversation des pâtes une fois entamées.

Le but de la présente invention est, entre autres, de répondre aux besoins énumérés ci-dessus.

Le but de la présente invention est encore de fournir un enduit qui résolve l'ensemble des problèmes posés par les enduits de l'art antérieur quel que soit leur type.

Ce but, et d'autres encore, sont atteints conformément à l'invention par un enduit qui se présente sous la forme de particules discrètes comprenant un enduit en poudre mis en forme et comprimé, au moins un agent liant de ladite poudre capable d'assurer la compression et la mise en forme de l'enduit en poudre, et au moins un agent de désintégration capable de provoquer la désintégration desdites particules au contact de l'eau, dans lequel l'agent de désintegration est choisi parmi les additifs effervescents.

Par particules discrètes, on entend que l'enduit selon l'invention se présente sous des formes telles que des pastilles, comprimés, tablettes, pilules, granulés. Ces termes ont - en ce qui concerne la forme qu'ils définissent - la signification qu'ils ont généralement dans des domaines techniques tels que celui des produits pharmaceutiques, des échantillons pour analyse physique (IRTF, diffraction des rayons X, Fluorescence X), des produits de nettoyage.

Des enduits qui se présentent sous la forme spécifique selon l'invention de particules discrètes d'un enduit en poudre mis en forme et comprimé n'ont jamais été décrits, ni suggérés dans l'art antérieur.

L'enduit selon l'invention permet de résoudre à la fois les problèmes rencontrés avec les enduits en poudre et les problèmes rencontrés avec les enduits en pâtes - prêts à l'emploi.

En d'autres termes, l'enduit selon l'invention du fait de sa forme spécifique présente de manière surprenante tous les avantages des enduits en poudre ainsi que tous les avantages des enduits en pâte sans présenter aucun des inconvénients de ces deux formes d'enduits.

Ainsi, l'enduit selon l'invention présente notamment les avantages suivants :
- la forme de particules discrètes, que l'on introduit directement dans l'eau à des fins de gâchage, permet d'empêcher toute émission de poussière ;

Selon l'invention, chaque particule comprend l'ensemble des constituants de l'enduit alors que dans les enduits en poudre de l'art antérieur chaque particule de taille très inférieure aux particules d'enduit selon l'invention, est constituée à 100% par un seul constituant de l'enduit.
- les performances de l'enduit selon l'invention sont très élevées, et au moins égales à celles des produits en poudre. Ces performances sont, de manière surprenante, combinées à une grande facilité d'utilisation, équivalente à celle des produits prêts à l'emploi, mais les problèmes de stockage et de conservation des pâtes une fois entamées sont évités.

En résumé, l'enduit selon l'invention permet de résoudre tous les problèmes liés aux formes traditionnelles connues d'enduits en poudre, et en pâte, tout en conservant et en associant leurs qualités et spécificités.

L'invention concerne en outre un « kit », « nécessaire », « trousse » comprenant les éléments suivants :
a) - au moins une particule d'enduit telle que définie ci-dessus ou un nombre défini de particules d'enduit ;
b) - un récipient doseur pour doser la quantité d'eau exacte à mélanger avec ladite particule, ou ledit nombre défini de particules (pour obtenir les proportions idéales d'eau et d'enduit) ;
c) - éventuellement un dispositif de mélange tel qu'une spatule.

Ce nombre défini, cette quantité définie de particules correspond également à un volume défini de particules que l'on peut donc éventuellement mesurer avec un récipient doseur.

Ledit kit peut comprendre en outre un livret, ou manuel d'instructions d). De préférence, les éléments a), b), c), d) sont contenus, renfermés dans un même emballage.

De préférence, le récipient doseur est pourvu d'une marque ou repère indiquant la quantité d'eau exacte à mélanger avec une particule, respectivement un nombre défini de particules.

Un tel kit associant l'enduit sous la forme de particules, pastilles, individuelles ; un récipient de dosage adapté ; et un dispositif de mélange tel qu'une spatule de mélange ou autre assure une préparation aisée selon le principe du « un pour un », c'est-à-dire que l'on associe une dose d'eau, prémarquée sur le récipient, avec une dose de produit, c'est-à-dire une particule telle qu'une pastille ou une quantité définie de particules.

Ce nombre défini de particules peut être conditionné par exemple dans un sac ou autre récipient prévu dans le kit ou bien on peut fournir dans le kit (ou de manière séparée) un dispositif tel qu'un récipient doseur permettant de mesurer ce nombre, cette quantité définie de particules.

Il est bien évident que l'on peut prévoir des récipients assurant le dosage de la quantité d'eau à associer à deux particules ou plus car à deux « nombres définis de particules » si l'on souhaite obtenir de plus grandes quantités d'enduit gâché.

En d'autres termes, on dispose d'un récipient gradué, marqué qui permet le dosage précis, exact de la quantité d'eau qui ajoutée à une particule (ou un nombre défini de particules) donnera un enduit gâché parfaitement dosé ayant les proportions idéales d'eau et d'enduit par exemple 38% d'eau exprimé par rapport à la masse d'enduit (sec).

Le dispositif de mélange associé permet d'obtenir un enduit gâché parfaitement homogène.

Même un utilisateur non professionnel peut ainsi préparer, facilement, de manière fiable, un enduit gâché aux proportions optimales.

L'invention va maintenant être décrite de manière plus détaillée dans ce qui suit.

On peut dire que l'invention consiste en l'ajout d'additifs aux formulations traditionnelles connues d'enduits en poudre de manière à permettre à la fois la compression de ces poudres, leur mise en forme, le maintient en l'état de ces particules discrètes lors de leur stockage, ainsi que leur désintégration au contact de l'eau.

La composition, la formulation des enduits en poudre sont connues de l'homme du métier dans ce domaine de la technique.

L'enduit en poudre peut être choisi parmi les enduits à base de ciment, les enduits à base de plâtre, les enduits à base de résine et les mélanges de ceux-ci.

L'homme du métier connaît quels sont les constituants rentrant dans la composition de ces divers enduits en poudre.

Un enduit en poudre à base de ciment comprend généralement du ciment Portland (blanc ou gris) à raison de 20 à 40% en poids du poids total de l'enduit en poudre, ce qui correspond généralement à une proportion équivalente dans l'enduit en particules selon l'invention.

A ce liant hydraulique peuvent s'ajouter différents ciments, comme du ciment alumineux ou fortement alumineux blanc ou gris à raison généralement de 5 à 35% du poids total de l'enduit en poudre. Les autres constituants sont des charges à raison généralement de 40 à 70% en poids du poids de l'enduit en poudre sous forme de silice ou de carbonates de calcium et des additifs (par exemple antimousse, fibres, rétenteurs d'eau, épaississants, accélérateur de prise, retardateur de prise, agent rhéologique, dispersant, fluidifiant, agent hydrophobe) dont les teneurs individuelles sont généralement situées entre 0,05% et 5% en poids.

Un enduit en poudre à base de plâtre comprend généralement de 3 à 10% en poids de ciment Portland et de 2 à 50% en poids de sulfates réactifs dérivés de minéraux naturels tels que le plâtre bêta ou le plâtre alpha. Les autres constituants sont des charges à raison généralement de 40 à 70% en poids sous forme de silice ou de carbonates de calcium et des additifs (par exemple antimousse, fibres, rétenteurs d'eau, épaississants, accélérateur de prise, retardateur de prise, agent rhéologique, dispersant, fluidifiant, agent hydrophobe) dont les teneurs individuelles sont généralement situées entre 0,05% et 5% en poids. Ces charges et additifs sont décrits en détail plus bas.

Un enduit en poudre à base de résine comprend généralement de 0,5% et 15% de résine sous forme de poudre redispersable dans l'eau, résine qui joue le rôle de liant et qui confère cohésion et adhérence au produit. Les autres constituants sont des charges à raison généralement de 40 à 70% en poids sous forme de silice ou de carbonates de calcium et des additifs (par exemple antimousse, fibres, rétenteurs d'eau, épaississants, agent rhéologique, dispersant, fluidifiant, agent hydrophobe) dont les teneurs individuelles sont généralement situées entre 0,05% et 5% en poids.

L'enduit en poudre représente généralement de 70 à 98% en poids total de l'enduit sous forme de particules discrètes selon l'invention.

Divers additifs peuvent être utilisés pour remplir les fonctions mentionnées ci-dessus, certains de ces additifs sont connus dans le domaine de la pharmacie pour réaliser des pastilles, comprimés, tablettes qui se désintègrent dans l'eau ; ou dans d'autres domaines pour réaliser des pastilles de produits divers.

L'enduit selon l'invention comprend au moins un agent liant dé l'enduit en poudre capable de permettre la compression et la mise en forme de cet enduit en poudre.

Cet agent liant est choisi parmi les dérivés de l'amidon tels que l'amidon natif, l'amidon prégélatinisé; les gommes telles que la gomme de guar, la gomme arabique, la gomme xanthane, les alginates, la gomme cellulosique ou CMC (carboxy méthyl cellulose) ; les polymères solubles dans l'eau à froid tels que les polyvinylpirrolidones, les éthers cellulosiques et les alcools polyvinyliques (PVA) ; et leurs mélanges.

La teneur en agent(s) liant(s) est généralement de 1 à 25% en poids du poids total de l'enduit selon l'invention.

L'enduit selon l'invention comprend en outre un agent de désintégration capable de provoquer la désintégration totale ou partielle des particules discrètes, telles que des pastilles, au contact de l'eau utilisée pour le gâchage de l'enduit.

La désintégration se fait sous l'effet de l'effervescence provoquée par un ou plusieurs additifs effervescents.

Ainsi, l'agent de désintégration est choisi parmi les additifs effervescents, qui au contact de l'eau libèrent par exemple du gaz carbonique qui désintègre la particule telle qu'une pastille.

Ce ou ces additifs effervescents sont choisis généralement parmi les mélanges d'au moins un acide avec au moins une base. Un exemple d'un tel mélange est un mélange d'acide citrique, d'acide tartrique et de bicarbonate de soude. Les proportions de ces réactifs acides et basiques les uns par rapport aux autres sont choisis en fonction de la formule de l'enduit et de l'effet souhaité.

La teneur en additif(s) effervescent(s) est généralement de 0,5 à 3% du poids total de l'enduit selon l'invention sous forme de particules discrètes telles que des pastilles.

D'autres additifs peuvent être éventuellement inclus dans les enduits selon l'invention. Il s'agit généralement d'additifs ajoutés à l'enduit en poudre (quel qu'il soit) qui facilitent le mélange des particules discrètes, telles que des pastilles, avec l'eau utilisée lors du gâchage.

L'enduit en poudre inclus dans l'enduit selon l'invention peut ainsi comprendre en outre un agent hydrophobe choisi par exemple parmi les oléates tels que l'oléate de sodium ; les stéarates tels que le stéarate de magnésium ; et les silanes. Ces agents hydrophobes associés aux agents de gonflement décrits plus haut en développent l'efficacité.

La teneur en agent(s) hydrophobe(s) est généralement de 0,5 à 10% en poids du poids total de l'enduit en poudre.

L'enduit en poudre inclus dans l'enduit selon l'invention peut également comprendre, en outre, un agent superplastifiant choisi par exemple parmi la mélanine sulfonée et les polyacrylates, à raison de 0,1 à 1% en poids du poids total de l'enduit en poudre.

L'enduit en poudre inclus dans l'enduit selon l'invention peut également comprendre, en outre, un agent antimousse en poudre, notamment dans le cas où la réaction d'effervescence génère une grande quantité de mousse. La teneur en agent(s) antimousse(s) est généralement de 0,1 à 3% en poids total de l'enduit en poudre.

L'enduit en poudre inclus dans l'enduit selon l'invention peut comprendre en outre de la colle animale à une teneur généralement de 0,2 à 2% en poids du poids total de l'enduit en poudre.

L'enduit en poudre inclus dans l'enduit selon l'invention peut enfin comprendre de la caséine à une teneur de 0,05 à 2% en poids.

Il est bien évident que l'homme du métier choisira les proportions des divers constituants qu'il souhaite inclure dans l'enduit en poudre dans les plages énumérées ci-dessus de façon à atteindre la quantité de 100% en poids pour la totalité de l'enduit en poudre.

L'enduit en poudre peut également comprendre en outre des pigments et/ou colorants permanents (ne subissant pas de changement de couleur).

L'enduit en poudre peut également comprendre en outre un colorant à changement de couleur par exemple tel que l'enduit soit d'une première couleur à l'état sec, qu'il prenne une autre couleur au contact de l'eau utilisée lors d'un gâchage et qu'il soit de nouveau de la première couleur après séchage de l'enduit.

Ledit colorant « à changement de couleur » est de préférence un colorant sensible au pH de type indicateur coloré tel que la phénolphtaléine ou la thymolphtaléine.

L'enduit selon l'invention se présente sous la forme de particules discrètes plus précisément de particules discrètes, comprimées, mises en forme, c'est-à-dire présentant une forme déterminée, voulue.

La forme des particules discrètes selon l'invention peut être définie par exemple comme celle de pastilles, tablettes, comprimés, pilules, granulés par analogie avec les particules mises en oeuvre par exemple dans le domaine de la pharmacie ou dans d'autres domaines précisés plus bas.

Les particules selon l'invention se présentent généralement sous la forme de disques, cylindres, de préférence à base circulaire, ou de sphères, d'un diamètre généralement de 1 mm à 10 cm, de préférence de 0,5 à 6 cm, de préférence encore de 1 à 3 cm, et d'une hauteur de 0,2 à 3 cm, de préférence de 1 à 2 cm.

La dimension des particules selon l'invention est donc très supérieure à celle des grains d'un enduit en poudre par exemple à celle des grains de l'enduit en poudre constituant les pastilles.

Les grains de cette poudre, qui sont chacun constitués par un seul constituant, ont en effet une taille généralement de 1 à 250 µm, ce qui entraîne une formation de poussière importante qui ne se produit pas avec l'enduit selon l'invention.

Les particules discrètes selon l'invention peuvent être préparées de manière classique par des procédés connus de l'homme du métier.

En général, on mélange les différents constituants de la particule : enduit en poudre, additifs divers, etc., qui sont généralement tous sous une forme de poudre, puis on place cette poudre dans un moule à la forme de la particule, telle qu'une pastille, que l'on souhaite obtenir, et l'on applique à cette poudre ainsi mise en forme une pression qui permet d'obtenir une particule, telle qu'une pastille, cohérente et compacte, cette opération peut être réalisée dans tout appareil connu pour cet usage tels que les pastilleuses/granuleuses destinées à la pharmacie, les pastilleuses destinées à la préparation des échantillons pour analyse physique (IM), les appareils destinés au pastillage de produits techniques tels que les produits de nettoyage, les produits pour lave-vaisselles, les pastilles de Javel, les pastilles de produits notamment chlorés pour le traitement des piscines.

Les particules telles que les pastilles ainsi obtenues peuvent être stockées par groupe de plusieurs particules telles que des pastilles dans un emballage commun ou isolément dans un emballage individuel, ces emballages individuels pouvant être regroupés dans un suremballage.

On a vu plus haut que l'invention concernait également un kit comprenant :
a) - une particule d'enduit telle que définie ci-dessus ou un nombre défini de pastilles d'enduit ;
b) - un récipient doseur pour doser la quantité d'eau exacte à mélanger avec la particule ou le nombre défini de particules ;
c) - éventuellement, un dispositif de mélange tel qu'une spatule.

Ce kit permet une utilisation facile de l'enduit selon l'invention.

Comme on l'a indiqué plus haut, la particule, le nombre défini de particules peut être présent dans le kit dans un conditionnement (sac, sachet) adéquat ou bien le kit peut comprendre un récipient doseur gradué pour la quantité de particules adéquate.

Lors de l'utilisation de particules telles que des pastilles selon l'invention pour en faire un enduit, le principe, la méthode de mise en oeuvre est commun aux différentes formules et peut se réaliser de deux manières principales, avec un kit fourni ou à l'aide d'un simple récipient doseur pour les particules, en fonction des attentes liées au produit :
- Première manière : Par l'intermédiaire d'un kit fourni avec les particules, pastilles, ce kit comprenant un récipient doseur marqué pour l'eau, et de préférence un dispositif d'agitation tel qu'une spatule : la mise en oeuvre est réalisée à l'aide d'un récipient doseur, selon le principe du « un pour un » : une dose d'eau (marquage sur le récipient) à laquelle on rajoute une particule telle qu'une pastille, ou une quantité définie de particules (2 doses d'eau pour 2 particules ou pastilles, ou 2 doses d'eau pour deux quantités définies de particules (par exemple deux « sacs » de particules)), ainsi de suite en fonction des attentes produits et de la taille du récipient.
   Après introduction de la ou des particules telles que des pastilles, un temps d'attente de quelques secondes à quelques minutes, par exemple 5 minutes peut être observé pour permettre la désintégration totale ou partielle de la pastille. Cette désintégration peut être accélérée mécaniquement par agitation manuelle, la capacité des pastilles à se désintégrer étant démultipliée si la taille des pastilles est réduite par fragmentation mécanique. Les propriétés de désintégration des pastilles en facilitent le mélange, qui s'opère rapidement (en quelques secondes à quelques dizaines de secondes). Une fois ce temps d'attente passé, la ou les particules désintégrée(s) ou en cours de désintégration peuvent être mélangées avec l'eau à l'aide de l'outil fourni tel qu'une spatule. Il est également possible de procéder directement au mélange de l'eau et des pastilles, après avoir cassé ces pastilles à l'aide d'une spatule ou de tout autre outil de mélange. Cette méthode est généralement réservée à la préparation d'enduits ne nécessitant que des volumes faibles et convenant pour des interventions ou réparations localisées.
- Deuxième manière : Par l'intermédiaire d'un récipient doseur quelconque. L'eau et les particules telles que des pastilles/granulés peuvent être dosés à l'aide d'un récipient quelconque : par exemple 3 récipients de pastilles/granulés pour un récipient d'eau. Cette deuxième méthode est en général réservée aux pastilles de petites taille, de type granulés, avec comme finalité de préparer une quantité importante d'enduit par exemple pour des travaux de grande ampleur, comparables à ceux réalisés avec un enduit en poudre classique, par opposition à la première manière présentée ci-dessus. Après introduction des particules telles que des pastilles ou granulés dans l'eau, un temps d'attente peut être marqué pour permettre aux pastilles de débuter leur désintégration. L'obtention d'un enduit homogène est réalisée par mélange manuel. Il est également possible de mélanger directement les pastilles/granulés jusqu'à homogénéisation.

Que l'une ou l'autre des deux manières de préparation de l'enduit soit utilisée, cette méthode de mise en oeuvre en particules, telles que des pastilles, selon l'invention permet d'obtenir après homogénéisation un enduit prêt à l'emploi ayant des proportions idéales d'eau et d'enduit, et présente les avantages suivants :
- Grande facilité de dosage, plus de manipulation de pulvérulents, absence de poussière à la manipulation ou au mélange. L'enduit est facile à préparer, à mélanger.
- Toutes les propriétés des enduits en poudre peuvent être ainsi obtenues, tout en disposant d'une facilité de préparation jusqu'alors inconnue.
- Les propriétés d'application sont comparables à elles d'un enduit en poudre
- Ce principe qui permet de réaliser des enduits sous une forme nouvelle s'applique aux enduits à séchage rapide, aux enduits à indication de séchage, ainsi qu'à des tailles et des formes de pastilles ou de granulés très variés.
- Lors de la formulation, il est possible de privilégier les propriétés de l'enduit lui-même une fois gâché ou les propriétés des pastilles et de leur désintégration, ceci en ajustant les additifs liants de pastillage/désintégration.

L'invention va maintenant être décrite en référence aux exemples suivants donnés à titre illustratif et non limitatif.

### EXEMPLES

Dans les exemples qui suivent, on prépare des enduits, l'enduit de l'example 4 étant un enduit selon l'invention, sous forme de pastilles, à partir des formulations présentées dans les exemples 1 à 4.

Les différentes formulations présentées ci-dessous sont mélangées à sec dans un mélangeur pour poudres (mélangeur à socs ou mélangeur à mouvement planétaire). Le temps de mélange est généralement de 3 à 10 minutes.

Le mélange homogène est alors introduit en quantité prédéfinie dans la pastilleuse. La pastilleuse est constituée d'un moule qui se compose d'un piston mobile et d'une partie creuse, qui reçoit la poudre et le piston. Une force est ensuite exercée sur le piston pour compacter la poudre jusqu'à l'obtention d'une pastille. Cette force est déterminée de manière à obtenir la cohésion recherchée et la meilleure efficacité de la désintégration des pastilles. Cette force dépend donc de l'effet voulu, de l'appareil à pastiller et de la formule à pastiller. Des essais pratiques permettent de la déterminer aisément.

### EXEMPLE 1 (non conforme à l'invention et donné à titre d'illustration) : Formulation pour pastille d'enduit à base de ciment.

La formulation pour une pastille d'enduit à base de ciment est la suivante :

| | |
|---|---|
| Résine poudre redispersable | 6,0% |
| Caséine poudre | 0,8%. |
| Carbonate de lithium | 0,09% |
| Gluconate de soude | 0,06% |
| Ether cellulosique moyenne viscosité | 0,50% |
| Amidon modifié basse viscosité | 0,6% |
| Fibres polyamide 0,8 mm | 1,0% |
| Ciment portland blanc 52,5 | 39,6% |
| Oxyde de titane | 2,5% |
| Accélérateur Nano alumine réactive | 0,4% |
| Poudre de marbre 30 µm | 30,45% |
| Poudre de marbre 15 µm | 10% |
| Charge allégée 250 µm | 7% |
| Oléate de sodium | 1% |
| TOTAL | 100% |

### Exemple de formulation 1

Une fois la poudre mélangée de manière homogène, le pastillage peut par exemple être réalisé avec une pastilleuse permettant d'obtenir des pastilles de forme cylindrique. La forme des pastilles n'influe pas sur leur mode de préparation ou sur les propriétés d'application de la pâte obtenue après gâchage avec de l'eau. Les pastilles issues de la formulation 1 peuvent être réalisées avec une force appliquée de 80 à 120 kN pour une pastille de 50 mm de diamètre et de 15 mm de haut.

La pastille est introduite dans un récipient contenant l'eau de gâchage dont le diamètre est étudié pour permettre l'introduction de la pastille tout en assurant un recouvrement complet de la pastille par l'eau de gâchage. Le taux de gâchage est de 40%.

Ce récipient présente des marques pré marquées correspondant à une, deux ou trois pastilles, voire plus, conformément à la description du kit donnée plus haut. Le dosage de l'eau est ainsi aisé, permettant de doser l'eau selon le principe indiqué : « une dose d'eau pour une dose d'enduit ». La manipulation de la pastille, son introduction dans l'eau, sa désintégration et son mélange ne génèrent pas de poussière. Le mélange est aisé et se réalise rapidement, sans qu'il soit nécessaire de disposer d'un savoir faire concernant la préparation ou le gâchage des enduits en poudre.

Une fois la pastille introduite dans l'eau, les deux manières de préparation citées plus haut peuvent s'appliquer.

Après 10 à 30 secondes de gâchage l'enduit est prêt à l'emploi, il peut être utilisé directement sans temps d'attente. Ses propriétés d'application sont alors identiques à celles d'un enduit en poudre à base ciment et sont directement dépendantes de la formulation d'enduit choisie.

Comme indiqué précédemment, dans le cas de l'utilisation simultanée de plusieurs pastilles, l'eau de gâchage est introduite en proportion du nombre de pastilles dans le récipient doseur, conformément aux marques présentes sur le récipient fourni avec le kit.

### EXEMPLE 2 (non conforme à l'invention et donné à titre d'illustration) : Formulation pour pastille d'enduit à base de plâtre

La formulation pour une pastille d'enduit à base de plâtre est la suivante :

| | |
|---|---|
| Résine poudre redispersable | 8,0% |
| Superplastifiant mélamine sulfonée | 0,6% |
| Plâtre alpha | 48% |
| Gypse fin | 0,1% |
| Ether cellulosique moyenne viscosité, poudre fine | 0,4% |
| Amidon modifié haute viscosité | 0,5% |
| Amidon modifié basse viscosité | 0,5% |
| Oxyde de titane | 3% |
| Poudre de marbre 15 µm | 33,4% |
| Superabsorbant cellulose réticulée | 0,5% |
| TOTAL | 100% |

### Exemple de formulation 2

Une fois la poudre mélangée de manière homogène, le pastillage peut par exemple être réalisé avec une pastilleuse permettant d'obtenir des comprimés cylindriques. La forme des comprimés n'influe pas sur leur mode de préparation ou sur les propriétés d'application de la pâte obtenue après gâchage avec de l'eau. Le pastillage est réalisé avec une force appliquée de 50 à 90 kN pour des comprimés de 5 mm de diamètre et de 2 mm de haut.

Les comprimés sont introduits dans un récipient contenant l'eau de gâchage. Le taux de gâchage de 38 % est réalisé en introduisant un volume d'eau pour trois volumes de comprimés. Le dosage de l'eau est ainsi aisé. La manipulation des comprimés, leur introduction dans l'eau, leur désintégration et leur mélange ne génèrent pas de poussière. Le mélange est aisé et se réalise rapidement, sans qu'il soit nécessaire de disposer d'un savoir faire concernant la préparation ou le gâchage des enduits en poudre.

### EXEMPLE 3 (non conforme à l'invention et donné à titre d'illustration) : Formulation pour pastille d'enduit à base de résine

La formulation pour une pastille à base de résine est la suivante :

| | |
|---|---|
| Résine poudre redispersable | 5,0% |
| Antimousse poudre | 0,5% |
| Ether cellulosique moyenne viscosité | 0,4% |
| Amidon modifié basse viscosité | 1,2% |
| Gomme de guar moyenne viscosité | 0,4% |
| Fibres cellulose 0,2 mm | 1,0% |
| Poudre de marbre 30 µm | 56% |
| Poudre de marbre 15 µm | 29% |
| Stéarate de magnésium | 1% |
| Talc fin | 5% |
| Superabsorbant sur base acrylique | 0,5% |
| TOTAL | 100% |

### Exemple de formulation 3

Une fois la poudre mélangée de manière homogène, le pastillage peut par exemple être réalisé avec une pastilleuse permettant d'obtenir des pastilles cylindriques. La forme des pastilles n'influe pas sur leur mode de préparation ou sur les propriétés d'application de la pâte obtenue après gâchage avec de l'eau. Le pastillage est réalisé avec une force appliquée de 60 à 100 kN pour une pastille de 50 mm de diamètre et de 17 mm de haut.

Les pastilles sont introduites dans un récipient contenant l'eau de gâchage dont le diamètre est étudié pour permettre l'introduction de la pastille out en assurant un recouvrement complet de la pastille par l'eau de gâchage. Le taux de gâchage est de 50%. Le récipient présente des marques correspondant à une, deux ou trois pastilles. Le dosage de l'eau est ainsi aisé. La manipulation de la pastille, son introduction dans l'eau, sa désintégration et son mélange ne génèrent pas de poussière. Le mélange est aisé et se réalise rapidement, sans qu'il soit nécessaire de disposer d'un savoir faire concernant la préparation ou le gâchage des enduits en poudre.

Une fois la pastille introduite dans l'eau, les deux manières de préparation citées plus haut peuvent s'appliquer. La manipulation de la pastille, son introduction dans l'eau, sa désintégration et son mélange ne génèrent pas de poussière. Le mélange est aisé et se réalise rapidement.

Comme indiqué précédemment, dans le cas de l'utilisation simultanée de plusieurs pastilles, l'eau de gâchage est introduite en proportion du nombre de pastilles dans le récipient doseur.

### EXEMPLE 4 (conforme à l'invention) : Formulation pour pastille d'enduit effervescente à base de résine

La formulation pour une pastille d'enduit effervescente à base de résine est la suivante :

| | |
|---|---|
| Résine poudre redispersable | 6,0% |
| Antimousse poudre-débullant | 1% |
| Stéarate de magnésium | 1% |
| Ether cellulosique moyenne viscosité | 0,4% |
| Amidon modifié basse viscosité | 1,2% |
| Gomme de guar basse viscosité | 0,6% |
| Fibres polyamide 0,8 mm | 1,0% |
| Poudre de marbre 30 µm | 44,9% |
| Poudre de marbre 15 µm | 29,8% |
| Stéarate de magnésium | 1% |
| Talc fin | 5% |
| Oxyde de titane | 4% |
| Bicarbonate de soude poudre fine | 0.8 |
| Acide citrique poudre fine | 2,5 |
| Acide tartrique poudre fine | 0,8 |
| TOTAL | 100% |

### Exemple de formulation 4

Une fois la poudre mélangée de manière homogène, le pastillage peut par exemple être réalisé avec une pastilleuse permettant d'obtenir des pastilles cylindriques. La forme des pastilles n'influe pas sur leur mode de préparation ou sur les propriétés d'application de la pâte obtenue après gâchage avec de l'eau. Le pastillage est réalisé avec une force appliquée de 80 à 100 kN pour une pastille de 30 mm de diamètre et de 10 mm de haut.

Les pastilles sont introduites dans un récipient contenant l'eau de gâchage dont le diamètre est étudié pour permettre l'introduction de la pastille tout en assurant un recouvrement complet de la pastille par l'eau de gâchage. Le taux de gâchage est de 50%.

Le récipient présente des marques correspondant à une, deux ou trois pastilles. Le dosage de l'eau est ainsi aisé. La manipulation de la pastille, son introduction dans l'eau, sa désintégration et son mélange ne génèrent pas de poussière. Le mélange est aisé et se réalise rapidement, sans qu'il soit nécessaire de disposer d'un savoir faire concernant la préparation ou le gâchage des enduits en poudre.

Une fois la pastille introduite dans l'eau, l'effervescence se produit et se traduit par un dégagement important de gaz carbonique. Cette effervescence provoque une désagrégation rapide de la pastille et un épaississement de l'eau de gâchage qui est absorbée par la pastille désagrégée et par la pastille en cours de réaction. Après 30 secondes d'attente il est possible de gâcher la pastille pour homogénéiser la pâte et diminuer l'air occlus généré par l'effervescence. L'enduit obtenu est utilisable dès la fin de l'effervescence, il peut être utilisé directement sans temps d'attente. Ses propriétés d'application sont alors identiques à celles d'un enduit en poudre à base plâtre, et sont directement dépendantes de la formulation d'enduit choisie.

Comme indiqué précédemment, dans le cas de l'utilisation simultanée de plusieurs pastilles, l'eau de gâchage est introduite en proportion du nombre de pastilles dans le récipient doseur. L'utilisation simultanée de plusieurs pastilles ralentit le phénomène d'effervescence et la désintégration des pastilles.

## Revendications

1. Enduit se présentant sous la forme de particules discrètes comprenant un enduit en poudre mis en forme et comprimé, au moins un agent liant de ladite poudre capable d'assurer la compression et la mise en forme de l'enduit en poudre, et au moins un agent de désintégration capable de provoquer la désintégration desdites particules au contact de l'eau, dans lequel l'agent de désintégration est choisi parmi les additifs effervescents.

2. Enduit selon la revendication 1, dans lequel l'enduit en poudre est choisi parmi les enduits à base de ciment, les enduits à base de plâtre, les enduits à base de résine et les mélanges de ceux-ci.

3. Enduit selon l'une quelconque des revendications précédentes, dans lequel l'enduit en poudre représente de 70 à 98% en poids du poids total de l'enduit.

4. Enduit selon l'une quelconque des revendications précédentes, dans lequel l'agent liant est choisi parmi les dérivés de l'amidon tels que l'amidon natif, l'amidon prégélatinisé; les gommes telles que la gomme de guar, la gomme arabique, la gomme xanthane, les alginates, la gomme cellulosique ou CMC (carboxy méthyl cellulose) ; les polymères solubles dans l'eau à froid tels que les polyvinylpirrolidones, les éthers cellulosiques et les alcools polyvinyliques (PVA) ; et leurs mélanges.

5. Enduit selon l'une quelconque des revendications précédentes, dans lequel la teneur en agent(s) liant(s) est de 1 à 25% en poids du poids total de l'enduit.

6. Enduit selon la revendication 1, dans lequel les additifs effervescents sont choisis parmi les mélanges d'au moins un acide avec au moins une base tel qu'un mélange d'acide citrique, d'acide tartrique et de bicarbonate de soude.

7. Enduit selon l'une quelconque des revendications précédentes, dans lequel la teneur en additif(s) effervescent(s) est de 0,5 à 3% du poids total de l'enduit.

8. Enduit selon l'une quelconque des revendications précédentes dans lequel l'enduit en poudre comprend en outre un agent hydrophobe à une teneur de 0,5 à 10% en poids total de l'enduit en poudre.

9. Enduit selon l'une quelconque des revendications précédentes dans lequel l'enduit en poudre comprend en outre un agent superplastifiant à une teneur de 0,1 à 1% en poids du poids total de l'enduit en poudre..

10. Enduit selon l'une quelconque des revendications précédentes dans lequel l'enduit en poudre comprend en outre un agent antimousse en poudre à une teneur de 0,1 à 3% en poids du poids total de l'enduit en poudre.

11. Enduit selon l'une quelconque des revendications précédentes, qui comprend en outre de la colle animale à une teneur de 0,2 à. 2% en poids du poids total de l'enduit en poudre.

12. Enduit selon l'une quelconque des revendications précédentes, dans lequel lesdites particules discrètes se présentent sous la forme de pastilles, tablettes, comprimés, pilules, granulés.

13. Enduit selon l'une quelconque des revendications précédentes, dans lequel lesdites particules se présentent sous la forme de disques, cylindres de préférence à base circulaire, d'un diamètre de 1 mm à 10 cm, de préférence de 0,5 à 6 cm, de préférence encore de 1 à 3 cm et d'une hauteur de 0,2 à 3 cm, de préférence de 1 à 2 cm.

14. Kit comprenant les éléments suivants :
a) - au moins une particule d'enduit telle que définie dans l'une quelconque des revendications 1 à 13, ou un nombre défini de ces particules ;
b) - un récipient doseur pour doser la quantité d'eau exacte à mélanger avec là particule, ou le nombre défini de particules ;
c) - éventuellement un dispositif de mélange tel qu'une spatule.

## Claims

1. Plaster in the form of discrete particles comprising a shaped and compressed powdered plaster, at least one binding agent for said powder capable of ensuring the compression and shaping of the powdered plaster, and at least one disintegration agent capable of causing the disintegration of said particles upon contact with water, wherein the disintegration agent is selected from effervescent additives.

2. Plaster according to claim 1, wherein the powdered plaster is selected from cement-based plasters, plaster-based plasters, resin-based plasters and mixtures thereof.

3. Plaster according to any one of the preceding claims, wherein the powdered plaster represents 70 to 98% by weight of the total weight of the plaster.

4. Plaster according to any one of the preceding claims, wherein the binding agent is selected from starch derivatives such as native starch, pregelatinised starch; gums such as guar gum, gum arabic, xanthan gum, alginates, cellulose gum or CMC (carboxy methyl cellulose); cold water-soluble polymers such as polyvinylpirrolidones, cellulose ethers and polyvinyl alcohols (PVA); and mixtures thereof.

5. Plaster according to any one of the preceding claims, wherein the binding agent(s) content is 1 to 25% by weight of the total weight of the plaster.

6. Plaster according to claim 1, wherein the effervescent additives are selected from the mixtures of at least one acid with at least one base such as a mixture of citric acid, tartaric acid and sodium bicarbonate.

7. Plaster according to any one of the preceding claims, wherein the effervescent additive(s) content is 0.5 to 3% of the total weight of the plaster.

8. Plaster according to any one of the preceding claims, wherein the powdered plaster further comprises a hydrophobic agent at a content of 0.5 to 10% of the total weight of the powdered plaster.

9. Plaster according to any one of the preceding claims, wherein the powdered plaster further comprises a super-plasticising agent at a content of 0.1 to 1% by weight of the total weight of the powdered plaster.

10. Plaster according to any one of the preceding claims, wherein the powdered plaster further comprises a powder anti-foaming agent at a content of 0.1 to 3% by weight of the total weight of the powdered plaster.

11. Plaster according to any one of the preceding claims, which further comprises animal glue at a content of 0.2 to 2% by weight of the total weight of the powdered plaster.

12. Plaster according to any one of the preceding claims, wherein said discrete particles are in the form of lozenges, troches, tablets, pills, granules.

13. Plaster according to any one of the preceding claims, wherein said particles are in the form of disks, cylinders preferably with a circular base, having a diameter of 1 mm to 10 cm, preferably 0.5 to 6 cm, more preferably 1 to 3 cm and a height of 0.2 to 3 cm, preferably 1 to 2 cm.

14. Kit comprising the following items:
a) - at least one plaster particle as defined in any one of claims 1 to 13, or a defined number of said particles;
b) - a measuring vessel to measure the exact quantity of water to be mixed with the particle, or the defined number of particles;
c) - optionally a mixing device such as a spatula.

## Patentansprüche

1. Spachtelmasse, präsent in Form von diskreten Teilchen, umfassend einen Pulverspachtelmasse, geformt und verdichtet, wenigstens ein Bindemittel des Pulvers zur Verdichtung und Formung des Pulverspachtelmasse, und wenigstens ein Desintegrationsmittel zur Desintegration der genannten Teilchen im Kontakt mit Wasser, bei dem das Desintegrationsmittel ausgewählt wird unter den Aufbrausungsadditiven.

2. Spachtelmasse nach Anspruch 1, bei dem der Pulverspachtelmasse ausgewählt wird unter den Spachtelmassen auf Zementbasis, den Spachtelmassen auf Gipsbasis, den Spachtelmassen auf Harzbasis und den Mischungen aus diesen.

3. Spachtelmasse nach einem der vorhergehenden Ansprüche, bei dem der Pulverspachtelmasse 70 bis 98 Gew.% des Gesamtgewicht der Spachtelmasse darstellt.

4. Spachtelmasse nach einem der vorhergehenden Ansprüche, bei dem das Bindemittel ausgewählt wird unter den Stärkederivaten wie etwa dem nativen Stärke, dem vorverkleistertem Stärke; den Gummis wie etwa dem Guargummi, dem Gummi arabicum, dem Xanthangummi, den Alginaten, dem Cellulosegummi oder CMC (Carboxymethylcellulose); den in kaltem Wasser löslichen Polymeren wie etwa den Polyvinylpyrrolidonen, den Celluloseethern und den Polyvinylalkoholen (PVA); und ihren Mischungen.

5. Spachtelmasse nach einem der vorhergehenden Ansprüche, bei dem der Gehalt an Bindemittel(n) 1 bis 25 Gew.% des Gesamtgewicht der Spachtelmasse beträgt.

6. Spachtelmasse nach Anspruch 1, bei dem die Aufbrausungsadditive ausgewählt werden unter den Gemischen aus wenigstens einer Säure und wenigstens einer Base wie etwa ein Gemisch aus Zitronensäure, Weinsäure und Natriumbicarbonat.

7. Spachtelmasse nach einem der vorhergehenden Ansprüche, bei dem der Gehalt an Aufbrausungsadditiv(en) 0,5 bis 3% des Gesamtgewicht der Spachtelmasse beträgt.

8. Spachtelmasse nach einem der vorhergehenden Ansprüche, bei dem der Pulverspachtelmasse außerdem ein wasserabweisendes Mittel mit einem Gehalt von 0,5 bis 10% des Gesamtgewichts der Pulverspachtelmasse enthält.

9. Spachtelmasse nach einem der vorhergehenden Ansprüche, bei dem der Pulverspachtelmasse außerdem einen Superweichmacher mit einem Gehalt von 0,1 bis 1 Gew.% des Gesamtgewichts der Pulverspachtelmasse enthält.

10. Spachtelmasse nach einem der vorhergehenden Ansprüche, bei dem der Pulverspachtelmasse außerdem ein pulverförmiges Antischaummittel mit einem Gehalt von 0,1 bis 3 Gew.% des Gesamtgewichts der Pulverspachtelmasse enthält.

11. Spachtelmasse nach einem der vorhergehenden Ansprüche, bei dem der Pulverspachtelmasse außerdem tierischen Klebstoff mit einem Gehalt von 0,2 bis 2 Gew.% des Gesamtgewichts der Pulverspachtelmasse enthält.

12. Spachtelmasse nach einem der vorhergehenden Ansprüche, bei dem die genannten diskreten Teilchen die Form von Pastillen, Tabletten, Pillen, Granulaten haben.

13. Spachtelmasse nach einem der vorhergehenden Ansprüche, bei dem die genannten Teilchen die Form von Scheiben, Zylindern mit bevorzugt kreisförmiger Grundfläche, einem Durchmesser von 1 mm bis 10 cm, bevorzugt 0,5 bis 6 cm, noch bevorzugter 1 bis 3 cm haben und 0,2 bis 3 cm, bevorzugt 1 bis 2 cm hoch sind.

14. Kit, die folgenden Elemente umfassend:
a) - wenigstens ein Spachtelmasseteilchen wie definiert in einem der Ansprüche 1 bis 13, oder eine definierte Menge dieser Teilchen;
b) - einen Dosierbehälter zur exakten Dosierung der mit dem Teilchen oder der definierten Anzahl Teilchen zu mischenden Wassermenge;
c) - eventuell eine Mischgerät wie etwa einen Spatel bzw. einen Rührstab.
